(19) **Europäisches Patentamt / European Patent Office / Office européen des brevets**

(11) **EP 2 317 303 A2**

(12) **EUROPEAN PATENT APPLICATION**

(43) Date of publication:
 **04.05.2011 Bulletin 2011/18**

(51) Int Cl.:
 **G01N 15/14** *(2006.01)* **G01N 35/00** *(2006.01)*

(21) Application number: **10189389.9**

(22) Date of filing: **29.10.2010**

(84) Designated Contracting States:
 **AL AT BE BG CH CY CZ DE DK EE ES FI FR GB GR HR HU IE IS IT LI LT LU LV MC MK MT NL NO PL PT RO RS SE SI SK SM TR**
 Designated Extension States:
 **BA ME**

(30) Priority: **30.10.2009 JP 2009251386**

(71) Applicant: **SYSMEX CORPORATION
 Kobe-shi,
 Hyogo 651-0073 (JP)**

(72) Inventors:
 • **Ozasa, Masatsugu
  Hyogo 651-0073 (JP)**

 • **Ishisaka, Masaki
  Hyogo 651-0073 (JP)**
 • **Kosaka, Tokihiro
  Hyogo 651-0073 (JP)**
 • **Naito, Takamichi
  Hyogo 651-0073 (JP)**
 • **Saitou, Takeo
  Hyogo 651-0073 (JP)**
 • **Numada, Shigehiro
  Hyogo 651-0073 (JP)**

(74) Representative: **HOFFMANN EITLE
 Patent- und Rechtsanwälte
 Arabellastraße 4
 81925 München (DE)**

(54) **Cell analyzing apparatus and cell analyzing method**

(57)    A cell analyzing apparatus, comprising: a parameter obtaining section for obtaining a characteristic parameter from a cell in a measurement sample; an imaging section for capturing an image of the cell in the measurement sample; an analyzing section for counting a cell in which the characteristic parameter meets a predetermined requirement among the cells in the measurement sample as a counting target and generating output data based on a counting result; a display section for displaying an image of the cell meeting the predetermined requirement and the output data; and an input section for receiving an instruction to specify the image displayed on the display section, wherein the analyzing section excludes a cell relevant to the specified image from the counting target and regenerates the output data is disclosed.

   A cell analyzing method is also disclosed.

*FIG. 1*

**Description**

Field of the invention

The present invention relates to a cell analyzing apparatus and a cell analyzing method wherein a measurement sample circulated in a flow cell is irradiated with light to analyze cells in the measurement sample using light beams emitted from the cells.

Background

There is known a flow cytometry method, wherein a measurement sample including cells to be analyzed is irradiated with a laser beam to measure a dimension and shape of each cell using scattered light and fluorescent light emitted from the measurement sample.

The cell analyzing apparatus disclosed in U.S. Patent Application Publication 2008-0108103, for example, includes a flow cell for forming a sample flow including cells, a light source for irradiating the sample flow in the flow cell with light, a detector for detecting a scattered light signal and a fluorescent light signal emitted from each cell in the sample flow by being irradiated with light, and a signal analyzer for calculating characteristic parameters by analyzing the signals detected by the detector, wherein a carcinoma cell and an atypical cell are discriminated from the cells in the sample based on the characteristic parameters calculated by the signal analyzer.

There is also disclosed in U.S. Patent Application Publication 2008-0108103 that the cell analyzing apparatus captures and confirms an image of the cell using a camera to confirm whether the carcinoma cell and the atypical cell are accurately identified in the cells in the sample based on the characteristic parameters.

The cell analyzing apparatus disclosed in U.S. Patent Application Publication 2008-0108103 is used in a screening test for uterocervical cancer. The apparatus can discriminate an abnormal cell, such as carcinoma cell, from a normal cell in the cells in the sample using the characteristic parameters obtained from the scattered light signal and the fluorescent light signal. In this cell analyzing apparatus, however, the image of the cell captured by the camera is not used for discriminating the cells.

Summary of the presented inventions

A first aspect of the presented invention is a cell analyzing apparatus, comprising: a parameter obtaining section for obtaining a characteristic parameter from a cell in a measurement sample; an imaging section for capturing an image of the cell in the measurement sample; an analyzing section for counting a cell in which the characteristic parameter meets a predetermined requirement among the cells in the measurement sample as a counting target and generating output data based on a counting result; a display section for displaying an image of the cell meeting the predetermined requirement and the output data; and an input section for receiving an instruction to specify the image displayed on the display section, wherein the analyzing section excludes a cell relevant to the specified image from the counting target and regenerates the output data.

The image captured by the imaging section shows the features of the target cell for counting (outer shape and inner structure). Therefore, by discriminating the target cells for counting based on this image, the target cell discrimination can be performed more accurately, thereby leading to a more accurate output data. The cell analyzing apparatus according to the present invention thus identifies the target cells for counting based on the images captured by the imaging section. When an instruction to specify the image displayed on the display is inputted to the input section, analyzing section excludes a cell relevant to the specified image from the counting target and regenerates the output data. As a result, accuracy of analysis can be increased.

Preferably the analyzing section discriminates the cell meeting the predetermined requirement from the other cells in the cells in the measurement sample, and counts the cell meeting the predetermined requirement as a first counting target and counts the other cells as a second counting target, the output data includes information indicating a proportion of the number of the first counting target to the number of the second counting target.

Preferably the display section outputs a warning when the proportion exceeds a predetermined threshold value.

With this configuration, for example, when the proportion is associated with a particular disorder, a threshold value corresponding to the association is determined in advance. When the proportion is beyond the threshold value, information indicating that effect is displayed on the display unit. Accordingly, a user can readily see the information displayed on the display unit without overlooking the possible disorder.

Preferably the cell meeting the predetermined requirement is an abnormal cell.

Preferably the input section receives an instruction to correct a cell which is currently counted as the first counting target to be counted as the second counting target.

With this configuration, when a cell initially identified as a cell for counting as first counting target based on the characteristic parameter is determined as a non-target cell for counting based on the image discrimination, the cell can be excluded from a group of cells initially identified as first counting target. Accordingly, the proportion can be accurately obtained.

Preferably the input section receives the correction instruction, the analyzing section reflects the number of the corrected cells on both of the first counting target and the second counting target and regenerates the output data.

With this configuration, when the cell initially identified as a cell for first counting target based on the characteristic parameter is determined as a cell for second counting target based on the image-based discrimination, the cell can be excluded from a first counting target and is added to second counting target. Accordingly the proportion can be accurately obtained.

Preferably the display section displays information relevant to the characteristic parameter obtained from the cell in the measurement sample together with the output data and the cell image.

Preferably the cell meeting the predetermined requirement comprises at least one of a cancer cell and an atypical cell.

Preferably the cell included in the measurement sample is a cell collected from uterine cervix of a subject.

Preferably the cell included in the measurement sample has a nucleus stained with a staining reagent.

Preferably the parameter obtaining section obtains at least an intensity of fluorescent light emitted from the cell as the characteristic parameter.

Preferably the imaging section captures the image of the cell meeting the predetermined requirement among the cells in the measurement sample.

Preferably the display section displays a screen including the output data and images of a plurality of cells meeting the predetermined requirement.

Preferably the display section displays the captured images of the plurality of cells meeting the predetermined requirement on the screen, and the input section receives an instruction to display the image currently not displayed on the screen among the images of the plurality of cells meeting the predetermined requirement on the screen.

A second aspect of the presented invention is a cell analyzing method, comprising steps of: obtaining characteristic parameter from a cell in a measurement sample; capturing an image of the cell in the measurement sample; counting a cell in which the characteristic parameter meets a predetermined requirement as a counting target and generating output data based on a counting result; displaying the image of the cell meeting the predetermined requirement and the output data; receiving an instruction to specify the displayed image; and excluding a cell relevant to the specified image from the counting target and regenerating the output data.

Brief description of the drawings

Fig. 1 is a perspective view illustrating a cell analyzing apparatus according to an embodiment of the present invention;
Fig. 2 is a block diagram illustrating a structure of the cell analyzing apparatus of Fig. 1;
Fig. 3 is a block diagram illustrating a personal computer constituting a system controller;
Fig. 4 is a diagram illustrating a structure of an optical detector;
Figs. 5A and 5B illustrate signal waveforms of a single cell;
Figs. 6A and 6B illustrate signal waveforms of two agglutinated cells;
Figs. 7A and 7B illustrate signal waveforms of three agglutinated cells;
Fig. 8 illustrates a scattergram in which a longitudinal axis represents a peak value of a forward scattered light signal obtained from a measurement sample and a lateral axis represents a pulse width of the forward scattered light signal;
Fig. 9 illustrates a scattergram in which a longitudinal axis represents a value obtained by dividing a differential integrated value of a fluorescent signal waveform of a cell to be analyzed by a peak value and a lateral axis represents a pulse width of a side scattered light signal;
Fig. 10 illustrates a histogram in which a lateral axis represents a pulse area of a side fluorescent light signal obtained from the measurement sample;
Fig. 11 is a flow chart illustrating a processing flow carried out by a CPU of the system controller;
Fig. 12 is a flow chart illustrating cell analysis processing steps carried out by the CPU of the system controller;
Fig. 13 is a schematic diagram illustrating one example of a screen displayed on a display unit;
Fig. 14 illustrates an image of a normal cell to be omitted from a group of abnormal cells;
Fig. 15 illustrates an image of agglutinated white blood cells to be omitted from a group of cells to be analyzed; and
Fig. 16 illustrates an image of a carcinoma cell that is an abnormal cell (cultured through an experiment).

DETAILED DESCRIPTION OF THE PREFERRED EMBODIMENTS

Hereinafter, an embodiment of a cell analyzing apparatus and a cell analyzing method according to the present invention will be described in detail with reference to the accompanying drawings.

[Overall Structure of Cell Analyzing Apparatus]

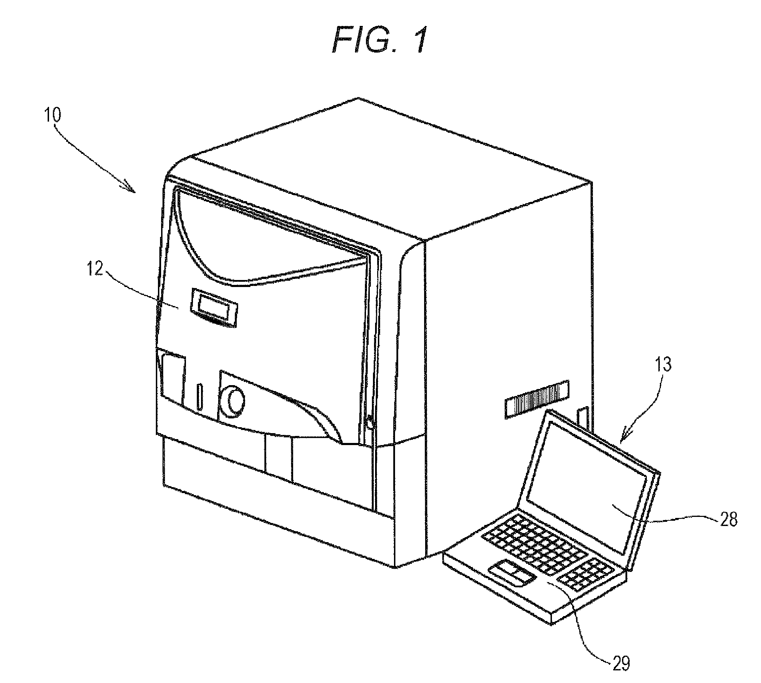

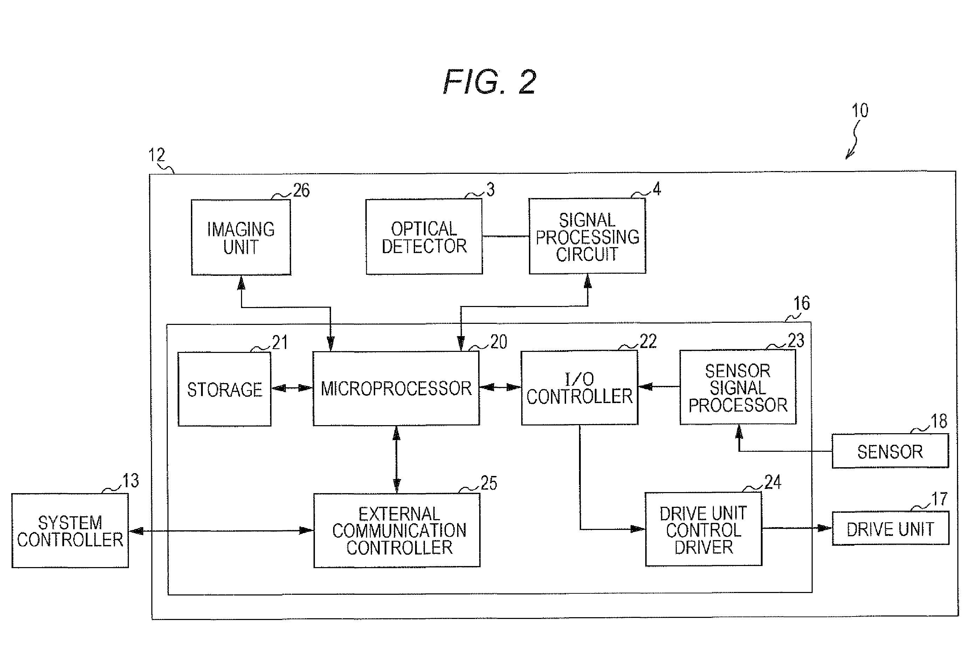

Fig. 1 is a perspective view illustrating a cell analyzing apparatus 10 according to an embodiment of the present invention. The cell analyzing apparatus 10 pours a measurement sample including cells collected from a patient into a flow cell, and irradiates the measurement sample circulated in the flow cell with laser beam to detect and analyze light beams emitted from the measurement sample (for example, forward scattered light, side fluorescent light), so that whether or not a carcinoma cell or an atypical cell (hereinafter, collectively referred to as "abnormal cells") are included in the cells can be determined. More specifically, the apparatus is used to screen uterocervical cancer using epithelial cells of uterine cervix. The cell analyzing apparatus 10 is equipped with an apparatus body 12 in charge of measuring a sample, and a system controller 13 connected to the apparatus body 12 to analyze a measurement result.
As illustrated in Fig. 2, the apparatus body 12 of the cell analyzing apparatus 10 has an optical detector 3 which obtains information such as dimensions of cell and nucleus from the measurement sample, a signal processing circuit 4, a measurement controller 16, a drive unit 17 including such components as motor, actuator and valve, various sensors 18, and an imaging unit 26 which captures a cell image. The signal processing circuit 4 includes an analog signal processing circuit which amplifies or filters an output from the optical detector 3 amplified by a preamplifier (not shown), an A/D converter which converts the output from the analog signal processing circuit into a digital signal, and a digital signal processing circuit which applies a predetermined waveform processing to the digital signal. When the measurement controller 16 controls the operation of the drive unit 17 while processing the signals outputted from the sensor 18, the measurement sample is suctioned and measured. The measurement sample used for screening uterocervical cancer can be prepared by applying conventional processes, such as centrifugation (thickening), attenuation (washing), agitation (tapping), and PI staining, to cells (epithelial cells) collected from uterine cervix of a patient (subject). The measurement sample thus prepared is put in a test tube, and the test tube is placed at a position beneath a pipette (not shown) of the apparatus body 12. The measurement sample is then suctioned by the pipette and supplied into the flow cell along with a sheath liquid so that a sample flow is formed in the flow cell. The PI staining uses propidium iodide (PI) which is a fluorescent staining solution containing a dyestuff. In the PI staining in which a nucleus is selectively stained, fluorescence can be detected from the nucleus.

[Structure of Measurement Controller]

The measurement controller 16 has a microprocessor 20, a storage 21, an I/O controller 22, a sensor signal processor 23, a drive unit control driver 24, and an external communication controller 25. The storage 21 includes, for example, ROM and RAM. The ROM stores therein a control program used to control the drive unit 17, and data necessary to run the control program. The microprocessor 20 can load the control program into the RAM to run the control program, or directly run the control program stored in the ROM.
The microprocessor 20 receives signals transmitted from the sensor 18 by way of the sensor signal processor 23 and the I/O controller 22. By running the control program, the microprocessor 20 can control the drive unit 17 based on the signals from the sensor 18 by way of the I/O controller 22 and the drive unit control driver 24.
The data processed by the microprocessor 20, and data required by the processing of the microprocessor 20 are transmitted and received to and from an external apparatus such as the system controller 13 by way of the external communication controller 25.

[Structure of System Controller]

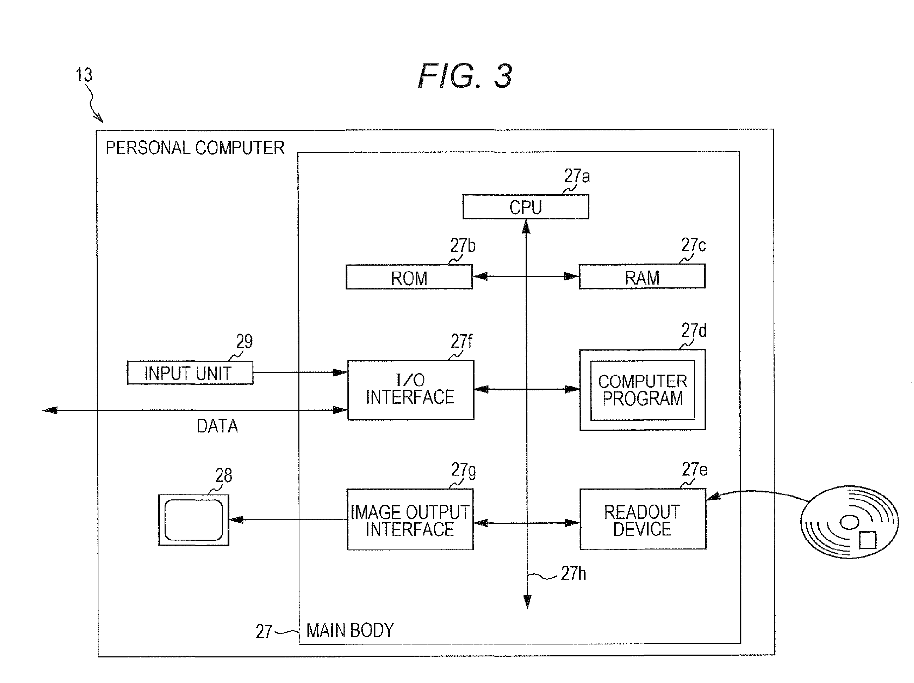

Fig. 3 is a block diagram of the system controller 13. The system controller 13 includes, for example, a personal computer, and mainly includes a body 27, a display unit 28, and an input unit 29. The body 27 mainly includes a CPU 27a, a ROM 27b, a RAM 27c, a hard disc 27d, a readout device 27e, an input/output interface 27f, and an image output interface 27g. These structural elements of the body 27 are connected by a bus 27h so that they can communicate with one another.
The CPU 27a can run computer programs stored in the ROM 27b and the computer programs loaded into the RAM 27c. The ROM 27b includes, for example, a mask ROM, PROM, EPROM, or EEPROM. The ROM 27b stores therein the computer programs run by the CPU 27a and data used to run the computer programs. The RAM 27c includes, for example, a SRAM or DRAM. The RAM 27c is used to read out the computer programs recorded in the ROM 27b and the hard disc 27d. The RAM 27c is also used as a working region of the CPU 27a when these computer programs are run.

In the hard disc 27d, there are installed a variety of computer programs to be run by the CPU 27a such as operating system and application programs, and data used to run these computer programs. For example, the operating system providing the graphical user interface environment, such as Windows (registered trademark) manufactured and sold by Microsoft Corporation, is installed in the hard disc 27d. In the hard disc 27d, there are further installed computer programs for discriminating agglutinated particles from non-agglutinated particles and data used to run the computer programs.

In the hard disc 27d, there is further installed an operation program for transmitting a measurement order (operation command) to the measurement controller 16 of the cell analyzing apparatus 10, receiving and processing the measurement result obtained by the apparatus body 12, and displaying the processed analysis result. The operation program is run on the operating system.

The readout device 27e includes a flexible disc drive, CD-ROM drive or DVD-ROM drive. The readout device 27e can read out computer programs or data recorded in a transportable recording medium. The input/output interface 27f includes a serial interface such as USB, IEEE1394, and RS-232C, a parallel interface such as SCSI, IDE, and IEEE1284, and an analog interface such as D/A converter and A/D converter. The input/output interface 27f is connected to the input unit 29 including a keyboard and a mouse, and a user can input data to the personal computer by manipulating the input unit 29. The input/output interface 27f is connected to the apparatus body 12 to transmit and receive data to and from the apparatus body 12.

The image output interface 27g is connected to the display unit 28 including, for example, LCD or CRT. the image output interface 27g outputs a video signal corresponding to the image data provided from the CPU 27a to the display unit 28. The display unit 28 displays an image (screen) according to the inputted video signal.

[Structures of Optical Detector and Imaging Unit]

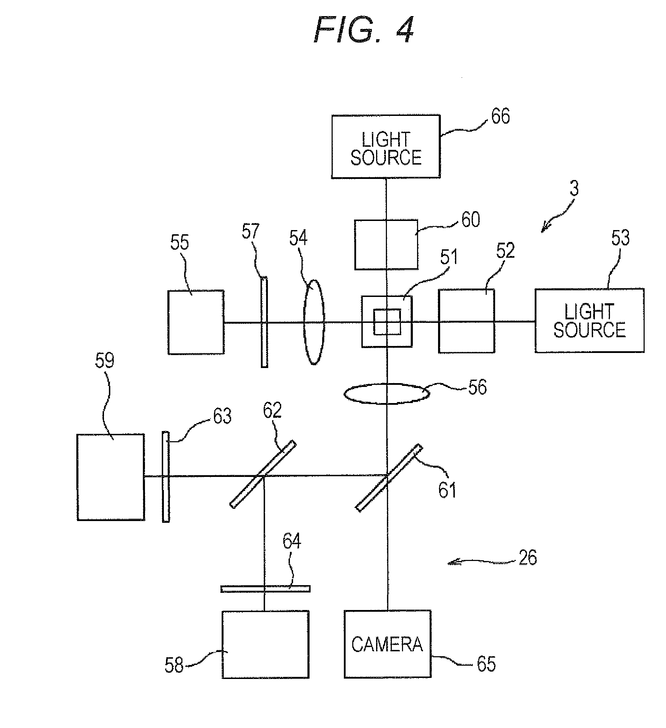

Fig. 4 is a diagram illustrating structures of the optical detector 3 and the imaging unit 26. The optical detector 3 has a light source 53 including a semiconductor laser. A laser beam radiated from the light source 53 passes through a lens system 52 to focus on the measurement sample circulated in a flow cell 51. Forward scattered light emitted from the cell in the measurement sample in response to the radiated laser beam passes through an object lens 54 and a filter 56 to be then detected by a photo diode (detector) 55. The lens system 52 includes lens groups such as collimator lens, cylinder lens, and condenser lens.

Side fluorescent light and side scattered light emitted from the cell pass through an obj ect lens 56 placed in the lateral direction of the flow cell 51, and then enters a dichroic mirror 61. The side fluorescent light and the side scattered light reflected on the dichroic mirror 61 enters a dichroic mirror 62. The side fluorescent light which is transmitted through the dichroic mirror 62 passes through a filter 63 to be detected by a photo multiplier 59. The side scattered light reflected on the dichroic mirror 62 passes through a filter 64 to be then detected by a photo multiplier 58.

The photo diode 55, photo multiplier 58, and photo multiplier 59 convert the detected light beams into electrical signals, and then respectively output a forward scattered light signal (FSC), a side scattered light signal (SSC), and a side fluorescent light signal (SFL). These signals are amplified by a pre-amplifier (not shown), and then transmitted to the signal processing circuit 4 (see Fig. 2) described above.

As illustrated in Fig. 2, forward scattered light data (FSC), side scattered light data (SSC), and side fluorescent light data (SFL) obtained through signal processes such as filtering and A/D conversion by the signal processing circuit 4, and characteristic parameters, to be described later, obtained from these data are transmitted by the microprocessor 20 to the system controller 13 by way of the external communication controller 25, and then stored in the hard disc 27d. The system controller 13 creates a scattergram and a histogram for analyzing cells and nuclei based on the forward scattered light data (FSC), side scattered light data (SSC), side fluorescent light data (SFL), and characteristic parameters to carry out a predetermined analyzing process.

Although a gas laser is a possible candidate of the light source 53 other than the semiconductor laser, the semiconductor laser is preferably used in view of low cost, compactness, and low power consumption. By using the semiconductor laser, manufacturing costs can be reduced, and the apparatus can be reduced in size with less power consumption. The present embodiment uses a blue semiconductor laser having a short wavelength advantageous in narrowing a beam. The blue semiconductor laser is also advantageous for fluorescence exciting wavelength in, for example, PI. Of the semiconductor lasers, preferably used is a red semiconductor laser advantageous in low cost and having better durability, which can be constantly supplied by manufacturers.

In the present embodiment, the imaging unit 26 is provided in addition to the optical detector 3. The imaging unit 26 is equipped with a light source 66 including a pulse laser, and a CCD camera 65. A laser beam radiated from the pulse laser 66 passes through a lens system 60 to enter the flow cell 51, and then transmits through the object lens 56 and the dichroic mirror 61 to finally form an image in the camera 65. The pulse laser 66 emits the light so as to meet a timing by which the camera 65 captures the image of the abnormal cell discriminated based on the characteristic parameters obtained from the forward scattered light data (FSC), side scattered light data (SSC), side fluorescent light data (SFL) as described later.

As illustrated in Fig. 2, the image of the abnormal cell captured by the camera 65 is transmitted by the microprocessor 20 to the system controller 13 by way of the external communication controller 25. The image of the abnormal cell is stored by the system controller 13 in the hard disc 27d (storage) so as to correspond to the characteristic parameters obtained from the forward scattered light data (FSC), side scattered light data (SSC), and side fluorescent light data (SFL).

[Details of Characteristic Parameters]

(Characteristic parameters used to classify cells to be analyzed)

The measurement sample may include, other than cells to be analyzed, mucus, blood residue, debris such as cell fragments, and white blood cells (hereinafter, may be collectively referred to as "debris") . In the case where the measurement sample includes a large quantity of debris, fluorescence from the debris is detected as noise, which adversely affects the measurement accuracy. According to the present embodiment, therefore, the signal processing circuit 4 obtains from the forward scattered light signal outputted from the photo diode 55 a plurality of characteristic parameters on which sizes of particles including cells to be analyzed are reflected, i.e., a signal waveform pulse width of the forward scattered light (FSCW) and a signal waveform peak value of the forward scattered light (FSCP).

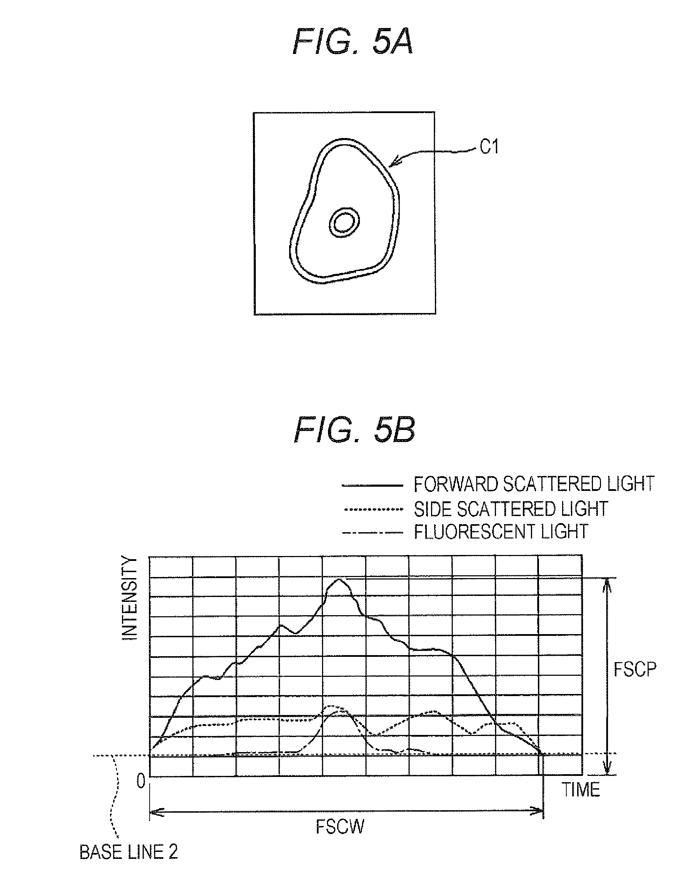

As illustrated in Fig. 5B, the signal waveform peak value of the forward scattered light (FSCP) represents a maximum intensity of the detected forward scattered light (FSCP illustrated in the drawing). The signal waveform pulse width of the forward scattered light (FSCW) represents a signal waveform width of the forward scattered light having a larger intensity than Baseline (Base Line 2). The system controller 13 receives from the apparatus body 12 the forward scattered light data including the signal waveform pulse width of the forward scattered light (FSCW) and the signal waveform peak value of the forward scattered light (FSCP) by way of the external communication controller 25. The system controller 13 then creates a scattergram using the signal waveform pulse width of the forward scattered light (FSCW) and the signal waveform peak value of the forward scattered light (FSCP), and classifies analysis target cells and particles (debris and the like) other than the analysis target cells based on the scattergram.

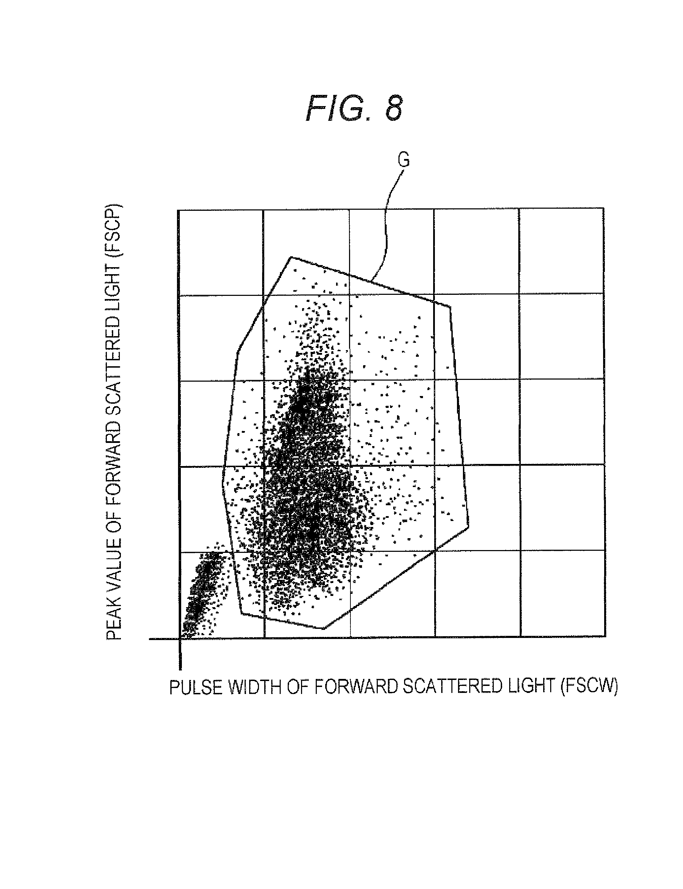

Fig. 8 illustrates an FSCW-FSCP scattergram in which a lateral axis represents the signal waveform pulse width of the forward scattered light (FSCW) and a longitudinal axis represents the signal waveform peak value of the forward scattered light (FSCP). The debris or the like is smaller than the analysis target cell. Therefore, the signal waveform peak value of the forward scattered light (FSCP) and the signal waveform pulse width of the forward scattered light (FSCW), which respectively reflect a particle size, are smaller than those of the analysis target cell. In Fig. 8, a cluster at the lower left represents the debris or the like. Therefore, whether or not the analyzed cell is abnormal can be more accurately determined when the cells in a region G are selected as cells to be thereafter analyzed.

(Characteristic parameters used to classify non-agglutinated cell and agglutinated cell)

In the present embodiment, the photo multiplier 59 detects the fluorescent light from the measurement sample flowing in the flow cell 51, and the signal processing circuit 4 obtains the signal waveform peak value (PEAK) of the fluorescent light signal which reflects the height of the signal waveform from the fluorescent light signal outputted from the photo multiplier 59 as a plurality of characteristic parameters and also obtains a differential integrated value (DIV) of the signal waveform which reflects a value indicating a ridge length of the signal waveform.

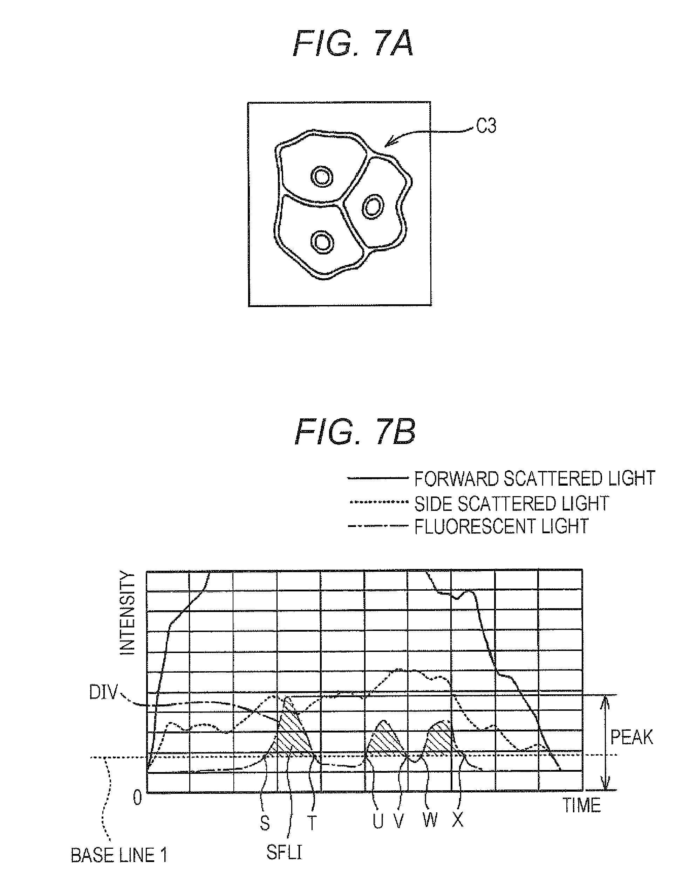

Fig. 7B is a diagram illustrating a signal waveform of a cell C3 illustrated in Fig. 7A, in which a longitudinal axis represents a detected light intensity and a lateral axis represents light signal detection time. As illustrated in Fig. 7B, the peak value (PEAK) of the fluorescent signal waveform (dashed line) represents the maximum intensity of the detected fluorescent light (PEAK in the drawing), and the differential integrated value (DIV) of the florescent light signal waveform represents the length of the fluorescent light signal waveform (total length of waveforms between point S to point T, point U to point V, point W to point X) having an intensity larger than Baseline (Base Line 1).

The system controller 13 receives the side fluorescent light data including the differential integrated value (DIV) of the fluorescent light signal waveform and the peak value (PEAK) of the fluorescent light signal waveform by way of the external communication controller 25, and compares a value (DIV/PEAK) obtained by dividing the differential integrated value (DIV) of the fluorescent light signal waveform by the peak value (PEAK) of the fluorescent light signal waveform with a predetermined threshold value to determine whether the cell is an agglutinated cell or a non-agglutinated cell.

The differential integrated value is obtained by differentiating the signal waveforms and summing absolute values thereby obtained. The differential integrated value of a signal with no valley in its waveform is substantially equal to twice a peak value of the signal. On the other hand, the differential integrated value of a signal having valleys in its waveform is larger than twice a peak value of the signal. The more valleys the waveform has and the deeper the valleys are, there is a larger difference between the differential integrated value and twice the peak value.

In consideration of a noise possibly superposed on a signal, the system controller 13 uses "2.6", that is slightly larger than "2", as the "predetermined threshold value" which is used as a reference value for determining whether the analysis target cell is an agglutinated cell or a non-agglutinated cell. The predetermined threshold value is not necessarily limited to 2. 6, however, should preferably stay in the range of 2.2 to 3. When the value (DIV/PEAK) obtained by dividing the differential integrated value (DIV) of the fluorescent light signal waveform by the peak value (PEAK) of the fluorescent light signal waveform is larger than the predetermined threshold value, there is at least one valley in the waveform of the fluorescent light signal. Accordingly, the analysis target cell can be classified as an agglutinated cell where a plurality of cells are agglutinated.

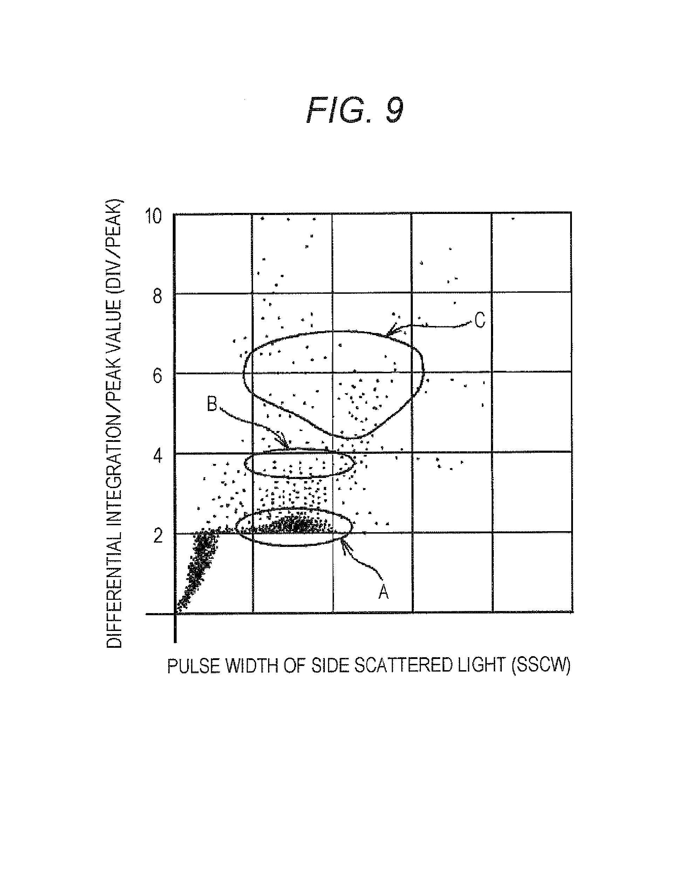

Fig. 9 illustrates a (DIV/PEAK) -SSCW scattergram in which a longitudinal axis represents the value obtained by dividing the differential integrated value of the fluorescent light signal waveform of the cell to be analyzed by the peak value (PEAK) and a lateral axis represents the pulse width of the side scattered light signal waveform. In Fig. 9, the values shown on the longitudinal axis (differential integrated value of the fluorescent signal waveform / peak value (DIV/PEAK)) of cells distributed in a region A substantially stay within the range of 2 to 2.6. Each of these cells is a single cell C1 as illustrated in Fig. 5A (non-agglutinated cell). Fig. 5B is a diagram illustrating the signal waveform of the cell C1. The signal waveform of the single cell has one peak as illustrated in Fig. 5B, wherein the signal waveform of the fluorescent light (dashed line) shows a more distinct peak than the signal waveform of the forward scattered light (solid line) and the signal waveform of the side scattered light (broken line).

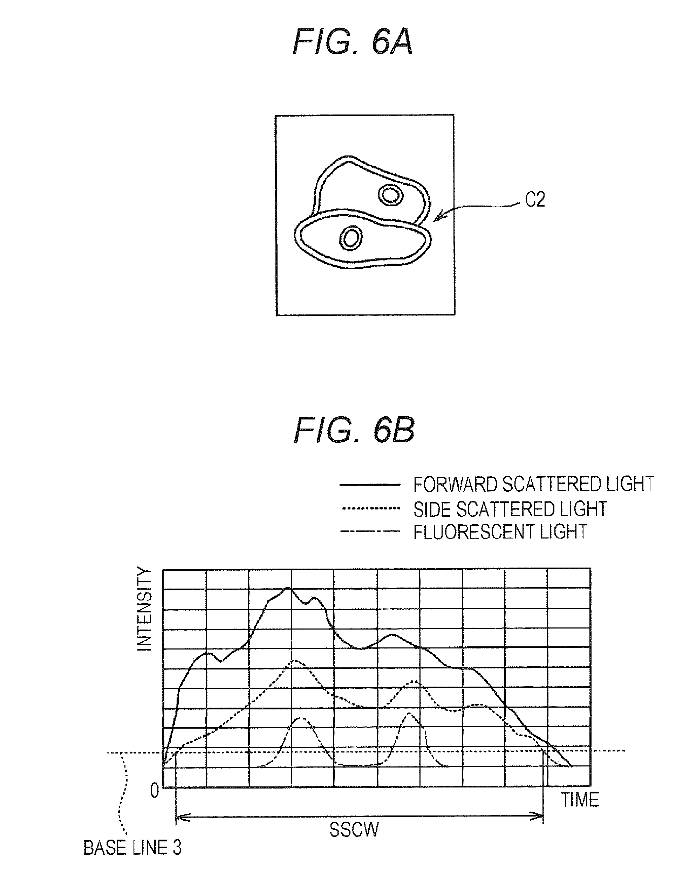

In Fig. 9, the values shown on the longitudinal axis of cells distributed in a region B substantially stay within the range of 3.5 to 4.2. Each of these cells is an agglutinated cell C2 as illustrated in Fig. 6A in which two cells are agglutinated. In Fig. 9, the values shown on the longitudinal axis of cells distributed in a region C substantially stay within the range of 4.5 to 7. Each of these cells is an agglutinated cell C3 as illustrated in Fig. 7A in which three cells are agglutinated. Fig. 6B is a diagram illustrating the signal waveform of the cell C2. As illustrated in Figs. 6B and 7B, the signal waveform of the fluorescent light shows more distinct peaks and valleys than the signal waveform of the forward scattered light and the signal waveform of the side scattered light.

As described above, the signal waveform of the fluorescent light shows more distinct peaks and valleys than the signal waveform of the forward scattered light and the signal waveform of the side scattered light. Therefore, the agglutinated cell and the non-agglutinated cell can be very accurately discriminated from each other.

(Characteristic parameters used to classify DNA quantity abnormal cell)

When a normal cell is transformed into a cancer cell or an atypical cell, cell division becomes more aggressive, increasing a DNA quantity of the cell as compared to that of the normal cell. Therefore, the DNA quantity can be used as an index for determining canceration or atypia of the cell. As a value which reflects the nuclear DNA quantity, there can be used a pulse area of the fluorescent light signal from the analysis target cell on which the laser beam is radiated (fluorescence quantity) (SFLI). As illustrated in Fig. 7B, the pulse area of the fluorescent light signal (fluorescence quantity) (SFLI) represents an area of a portion surrounded by Baseline (Base Line 1) and the fluorescent light signal waveform. The signal processing circuit 4 obtains the pulse area of the fluorescent light signal (fluorescence quantity) (SFLI) indicating the value of the nuclear DNA quantity of the cell to be analyzed from the fluorescent light signal outputted from the photo multiplier 59 as the characteristic parameter. Then, the system controller 13 determines whether the fluorescence quantity is equal to or greater than a predetermined threshold value, and classifies the target cell as a DNA abnormal cell having an abnormal DNA quantity when the fluorescence quantity is equal to or greater than the predetermined threshold value.

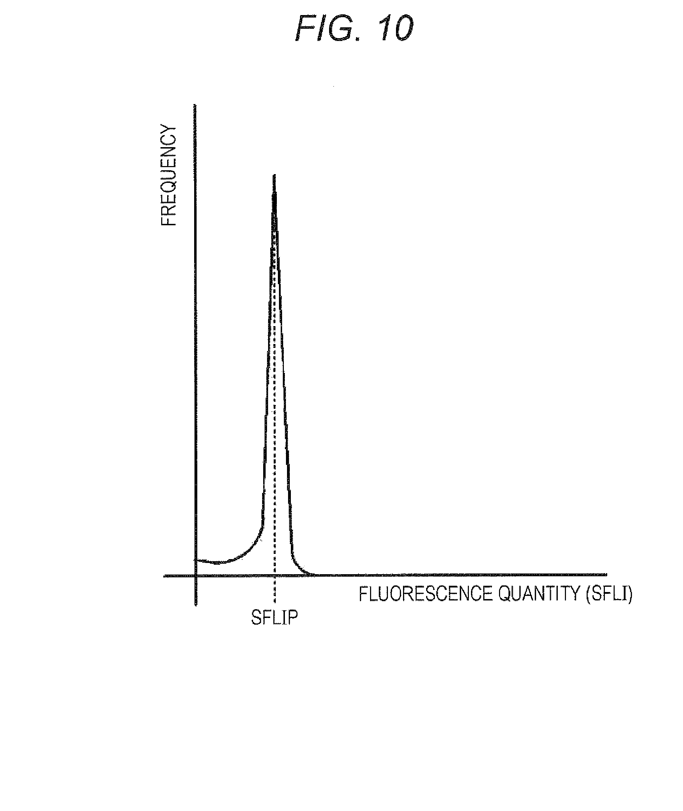

Most of the cells in the measurement sample used for screening uterocervical cancer are normal cells. Therefore, when a histogram as illustrated in Fig. 10 in which a lateral axis represents the pulse area of the fluorescent light signal (fluorescence quantity) is drawn, a peak appears at a position corresponding to the normal cells. The fluorescence quantity at the peak position indicates the DNA quantity of the normal cells. The system controller 13, therefore, classifies the cells showing the fluorescence quantity equal to 2.5 times or greater as the DNA quantity abnormal cells.

To discriminate the DNA quantity abnormal cell in the present embodiment, the histogram is drawn by using the pulse area of the fluorescent light signal obtained from a standard sample, and the cells showing the fluorescence quantity equal to 2.5 times or greater than the fluorescence quantity at the peak of the standard sample are determined as the DNA quantity abnormal cells.

(Discrimination of abnormal cells)

It is considered that when at least two agglutinated cells pass through a beam spot of the laser beam, the fluorescent light is emitted from a plurality of nuclei and detected by the photo multiplier 59, and the pulse having a relatively large area as a whole is accordingly outputted. However, as described above, the present embodiment can omit data based on the agglutinated cells with a high accuracy by using the value (DIV/PEAK) obtained by dividing the differential integrated value of the fluorescent light signal waveform by the peak value. Therefore, the present embodiment can omit the cell determined as the agglutinated cell from the cells classified as the DNA quantity abnormal cells to finally identify the truly abnormal cells, which are cancered or atypical cells. Accordingly, a cell measured as having a large DNA quantity only because it is an agglutinated cell can be prevented from being mistakenly classified as an abnormal cell.

The image of the cell discriminated as an abnormal cell based on the light signals and characteristic parameters is captured by the imaging unit 26 as described later. The captured image data is then transmitted to the system controller 13.

[Cell Analyzing Method]

Next, there will be described an embodiment of a cell analyzing method in which the cell analyzing apparatus 10 (see Fig. 1) is used.

First, a user manually prepares the measurement sample to be supplied to the flow cell. More specifically, the measurement sample is prepared by performing conventional processes such as centrifugation (thickening), attenuation (washing), agitation (tapping), and PI staining to the cells (epidermal cells) collected from uterine cervix of a patient.

Then, the user puts the prepared measurement sample in a test tube (not shown) and places the test tube at a position beneath a pipette (not shown) of the apparatus body.

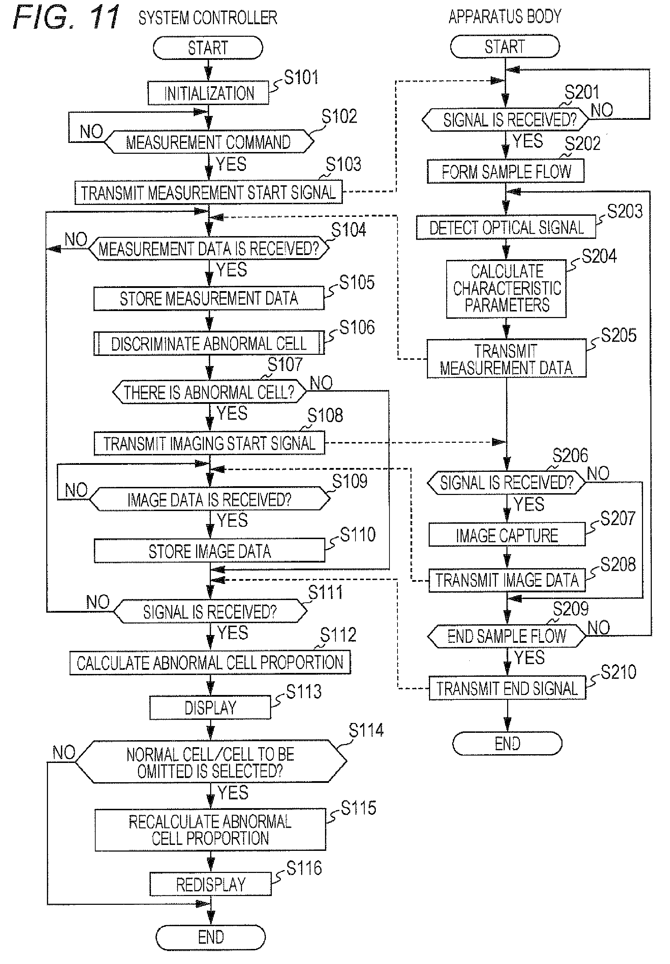

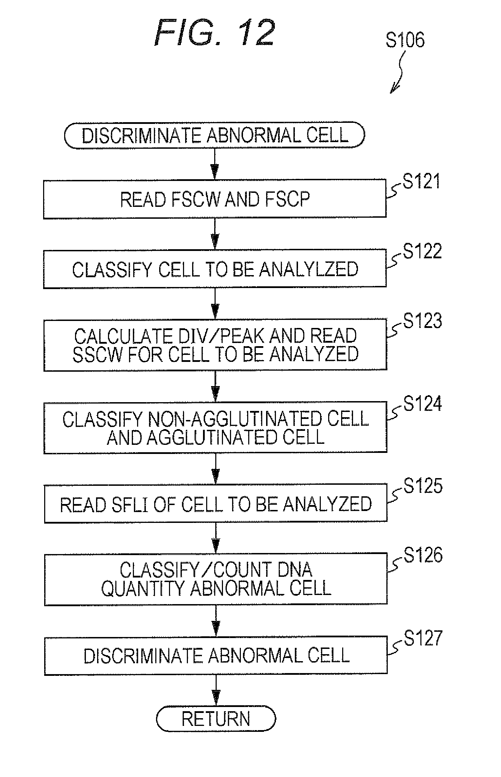

Next, a flow of processing steps carried out by the system controller 13 and the apparatus body 12 will be described with reference to Figs. 11 and 12.

When the system controller 13 is turned on, the CPU 27a of the system controller 13 initializes the computer program stored in the system controller 13 (step S101). The CPU 27a then determines whether a measurement command is received from a user (step S102). When it is determined that the measurement command was received, the CPU 27a transmits a measurement start signal to the apparatus body 12 by way of the I/O interface 27f (step S103).

When the measurement start signal transmitted from the system controller 13 is received by the measurement controller 16 of the apparatus body 12 (step S201), the measurement sample retained in the test tube is suctioned by the pipette and supplied to the flow cell 51 illustrated in Fig. 4 in the apparatus body 12 so that the sample flow is formed (step S202). Then, the cells in the measurement sample flowing in the flow cell 51 are irradiated with the laser beam. The forward scattered light emitted from the cells is detected by the photo diode 55, the side scattered light is detected by the photo multiplier 58, and the side fluorescent light is detected by the photo multiplier 59 (step S203).

The forward scattered light signal, side scattered light signal, and fluorescent light signal outputted from the optical detector 3 are transmitted to and processed by the signal processing circuit 4 in a predetermined manner. As a result, the forward scattered light data (FSC), side scattered light data (SSC), and side fluorescent light data (SFL) are obtained, and the characteristic parameters of these data described above are also obtained (step S204). The measurement controller 16 transmits the measurement data to the system controller 13 by way of the external communication controller 25 (step S205).

The CPU 27a of the system controller 13 determines whether the measurement data of the cells (the forward scattered light data (FSC), side scattered light data (SSC), side fluorescent light data (SFL), and characteristic parameters) is received from the apparatus body 12 (step S104). When it is determined that the measurement data was received, the CPU 27a stores the received measurement data in the hard disc 27d (step S105). Then, whether the target cell is an abnormal cell is determined (step S106).

Fig. 12 is a flow chart illustrating abnormal cell discriminating steps. Referring to Fig. 12, the abnormal cell discrimination in step S106 will be described.

Firstly, of all of the characteristic parameters of the forward scattered light data of the target cell received from the apparatus body 12, the CPU 27a reads the signal waveform pulse width of the forward scattered light (FSCW) and the signal waveform peak value of the forward scattered light (FSCP) from the hard disc 27d into the RAM 27c (step S121). The CPU 27a then determines whether the target cell is a cell to be analyzed (step S122). Here, if the signal waveform pulse width of the forward scattered light (FSCW) and the signal waveform peak value of the forward scattered light (FSCP) of the cell are within the predetermined range, the CPU 27a classifies the target cell as a cell to be analyzed. If they are out of the predetermined range, the CPU 27a determines that the target cell is not a cell to be analyzed and omits the target cell as debris.

Of all of the characteristic parameters of the side fluorescent light data of the analysis target cell, the CPU 27a reads the differential integrated value (DIV) of the fluorescent light signal waveform and the peak value of the fluorescent light signal waveform (PEAK) from the hard disc 27d into the RAM 27c to obtain the value (DIV/PEAK) calculated by dividing the differential integrated value (DIV) of the fluorescent light signal waveform by the peak value of the fluorescent light signal waveform (PEAK). Further, the CPU 27a reads the signal waveform pulse width of the side scattered light (SSCW) in the side scattered light data of the analysis target cell from the hard disc 27d into the RAM 27c (step S123).

As illustrated in Fig. 6B, the signal waveform pulse width of the side scattered light (SSCW) represents a signal waveform width of the side scattered light having an intensity greater than Baseline (Base Line 3).

The CPU 27a compares the value (DIV/PEAK) calculated by dividing the differential integrated value (DIV) of the fluorescent light signal waveform by the peak value of the fluorescent light signal waveform (PEAK) to the threshold value 2.6 to classify the target cell as an agglutinated cell or a non-agglutinated cell (step S124). The target cell is a non-agglutinated cell when the following formula (1) is satisfied, while the target cell is an agglutinated cell when the following formula (1) is not satisfied.

$$DIV/PEAK \leq 2.6 \ldots (1)$$

Then, the CPU 27a reads the fluorescence quantity (SFLI) indicating the pulse area of the fluorescent light signal, which is a value reflecting the cell nuclear DNA quantity, of the cell classified as a non-agglutinated cell in step S124 from the hard disc 27d into the RAM 27c as the characteristic parameter of the side fluorescent light data (step S125) . The hard disc 27d further stores therein the fluorescence quantity of the fluorescent light signal of the standard sample, and this fluorescence quantity is also read from the hard disc 27d into the RAM 27c.

The CPU 27a determines whether the fluorescence quantity (SFLI) of the cell classified as a non-agglutinated cell is equal to 2.5 times or greater than the fluorescence quantity (SFLIP) of the standard sample, in other words, whether the following formula (2) is satisfied.

$$SFLI \geq SFLIP \cdot 2.5 \ldots (2)$$

When the formula (2) is satisfied, the CPU 27a classifies the target cell as a DNA quantity abnormal cell having an abnormal nuclear DNA quantity and counts the cells accordingly (step S126). The CPU 27a then discriminates the target cell classified as a DNA abnormal cell in step S126 as an abnormal cell (step S127).

Returning to Fig. 11, the system controller 13 determines whether the target cell was discriminated as an abnormal cell (step S107). When it is determined that the target cell was discriminated as an abnormal cell, the system controller 13 transmits an imaging start signal to the apparatus body 12 by way of the I/O interface 27f to capture an image of the target cell (step S108). When it is determined that the target cell was not discriminated as an abnormal cell, the system controller 13 proceeds to step S111.

The measurement controller 16 of the apparatus body 12 determines whether the imaging start signal was received from the system controller 13 (step S206). When it is determined that the imaging start signal was received, the measurement controller 16 captures the image of the target cell (step S207) . When it is determined that the imaging start signal was not received, the measurement controller 16 proceeds to step S209.

The image is captured as follows; the light source 66 of the imaging unit 26 (see Fig. 4) is turned on to emit light at a predetermined timing. The camera 65 captures the image of the target cell in the flow cell 51 using the light emission.

Then, the measurement controller 16 transmits the image data of the target cell to the system controller 13 by way of the external communication controller 25 (step S208). The CPU 27a of the system controller 13 determines whether the image data is received from the apparatus body 12 (step S109). When it is determined that the image data was received, the CPU 27a stores the received image data in the hard disc 27d so as to correspond to the optical data such as the forward scattered light data of the target cell and the characteristic parameters (step S110).

The measurement controller 16 of the apparatus body 12 determines whether the sample flow circulated in the flow cell 51 ends (step S209) . In the case where the flow is already ended, the measurement controller 16 transmits information indicating the ended flow (end signal) to the system controller 13 (step S210). In the case where the sample flow is still ongoing, the processing returns to step S203.

The system controller 13 determines whether the end signal is received (step S111). When it is determined that the end signal was received, the system controller 13 calculates the proportion of abnormal cells (step S112).

The proportion of abnormal cells is the proportion of a total number X of abnormal cells obtained in the abnormal cell discrimination in step S106 to a total number Y of non-agglutinated cells. The total number Y of non-agglutinated cells is obtained by adding the total number X of abnormal cells to a total number Z of normal cells. Therefore, an abnormal cell proportion W is calculated by the following formula (3).

$$W = X/Y \times 100(\%) = X/(X + Z) \times 100(\%) \ ... \ (3)$$

The abnormal cell proportion is a numeral value serving as an index for determining whether at least a predetermined number of cancerated cells or atypical cells are present in the measurement sample analyzed by the cell analyzing apparatus 10. When the abnormal cell proportion is, for example, equal to or greater than 0.1%, the patient can be diagnosed as very likely to have cancer based on at least the predetermined number of cancerated or atypical cells detected in the measurement sample.

The abnormal cell proportion W may be calculated by the following formula (4).

$$W = W/Z \times 100(\%) \ ... \ (4)$$

Then, the system controller 13 displays the abnormal cell proportion, image of the abnormal cell, and the other information obtained in step S112 on the display unit 28 (step S113). At this time, the system controller 13 creates a scattergram using the characteristic parameters obtained in the abnormal cell discrimination.

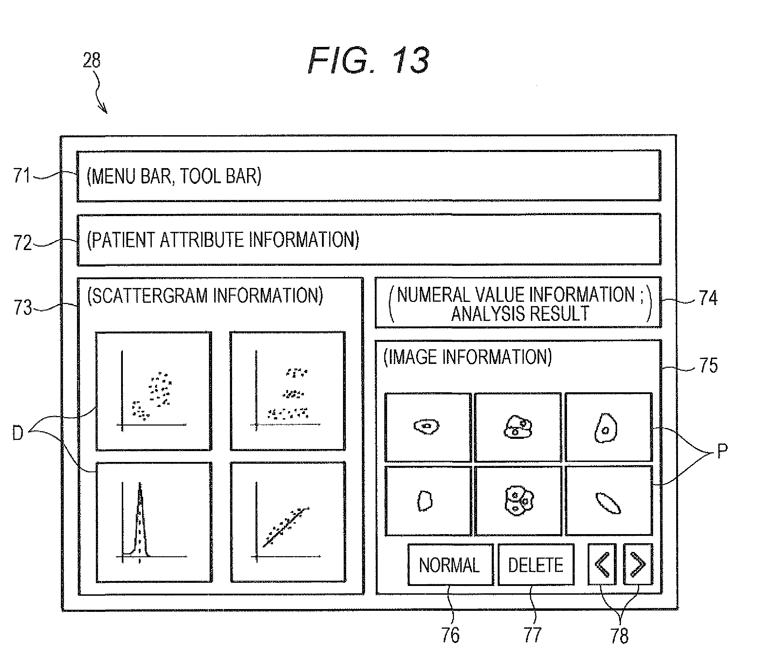

Fig. 13 is a schematic view illustrating an example of a screen displayed on the display unit 28. In Fig. 13, a display unit 71 which displays a tool bar and a menu bar is provided at the top of the screen of the display unit 28, and a patient attribute information display unit 72 which displays information related to an attribute of the patient (subject) such as patient name and patient ID is provided below the display unit 71. On the lower side of the patient attribute information display unit 72, there are provided a diagram display unit 73 which displays diagrams such a scattergram as illustrated in Fig. 8 or 9 and the other graphs D, an analysis result display unit 74 which displays an analysis result such as the number of abnormal cells and the abnormal cell proportion, and an image display unit 75 which displays an image P of the abnormal cell captured by the imaging unit 26.

Fig. 8 illustrates the FSCW-FSCP scattergram in which the lateral axis represents the pulse width (FSCW) and the longitudinal axis represents the peak value (FSCP). Fig. 9 illustrates the (DIV/PEAK)-SSCW scattergram in which the longitudinal axis represents the value (DIV/PEAK) obtained by dividing the differential integrated value of the fluorescent signal waveform by the peak value, and the lateral axis represents the signal waveform pulse width (SSCW) of the side scattered light signal.

The image display unit 75 can simultaneously display a plurality of images P (six images in the drawing). A user, for example, a cytotechnologist, can directly visually confirm the image P of the cell displayed on the image display unit 75 to determine the condition of the cell. The user can confirm whether the target cell is truly an abnormal cell by checking the displayed cell image.

The image display unit 75 is provided with a "normal" selection button 76, and a "delete" selection button 77. When the user observes the image P of the cell displayed on the image display unit 75 and determines that the target cell image is not the image of an abnormal cell but is the image of a normal cell, the user presses the "normal" selection button 76 while clicking and selecting the image P to omit the cell relevant to the image P from the abnormal cells, thereby rediscriminating the target cell as a normal cell.

In the case where the image P displayed on the image display unit 75 represents neither an abnormal cell nor a normal cell but is an image of an agglutinated cell or debris (image of the cell not eligible for analysis), the user presses the "delete" selection button 77 while selecting the image P to omit (delete) the cell relevant to the image P from the both abnormal and normal cells. Thus, the image display unit 75 according to the present embodiment provides a screen which accepts the selection of the cell image which should be deleted from the abnormal cells.

As a preferable aspect, when the user selects the "normal" selection button 76 or the "delete" selection button 77 while selecting the image P, the selected image P may be displayed in a manner apparently different from the display of the other images. For example, the color of only the selected image P may be inverted when it is displayed. As another preferable aspect, the selected image P may be deleted from the screen. Accordingly, when there is a plurality of images of the cells which should be omitted from the abnormal cells, it is easy to determine which of the images has been or has not been visually confirmed.

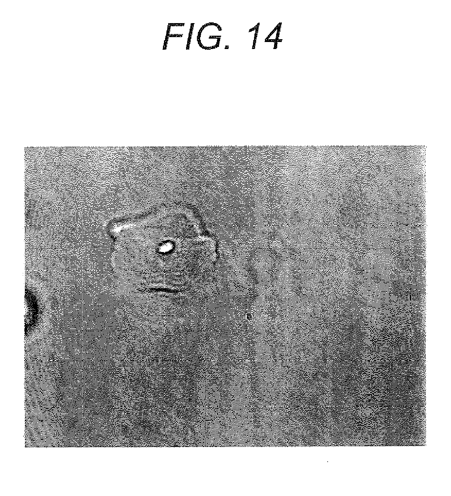

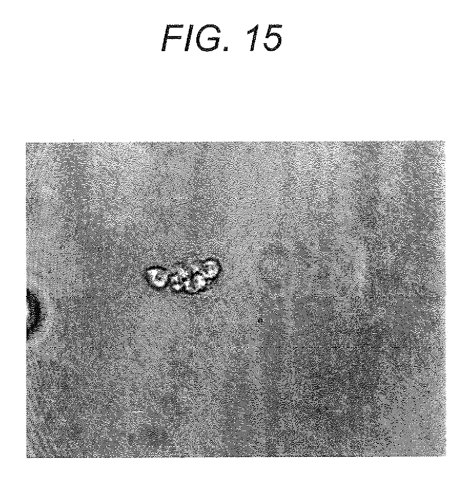

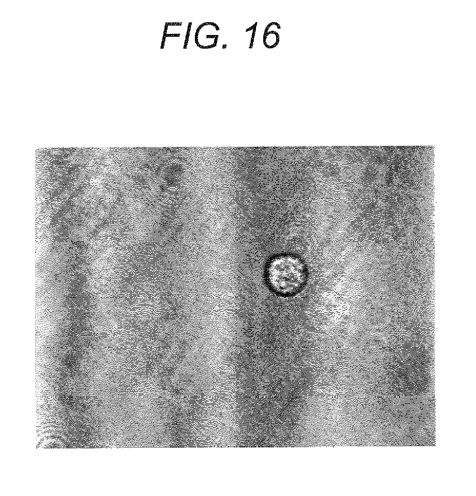

Figs. 14 to 16 illustrate examples of the image displayed on the image display unit 75. Fig. 14 is the image of a normal cell to be omitted from the abnormal cells, Fig. 15 is the image of a leucocyte agglutinated cell to be omitted from the analysis target, and Fig. 16 is the image of an abnormal cancer cell (cultured through an experiment).

The image display unit 75 is provided with a page feed button 78. When the page feed button 78 is pressed, the cell image P is switched to the next page or to the previous page so that the images of all of the abnormal cells can be displayed one by one on the image display unit 75.

The system controller 13 determines whether the cell to be omitted from the abnormal cells is selected in the image selection on the image display unit 75 (step S114 in Fig. 11). When the cell to be omitted is selected, the system controller 13 recalculates the abnormal cell proportion (step S115).

When, for example, a user observes an image of a cell, determines the cell as a normal cell, and omits the cell from the abnormal cells (when the user presses the "normal" button), the number of omitted cells (normal cells) Na is subtracted from the number of abnormal cells X which is the numerator of the formula (3), and recalculates the abnormal cell proportion W in the formula (5).

$$W = (X - Na)/Y ... (5)$$

The denominator Y of the formulas (3) and (5) is the sum $(X + Z)$ of the number of abnormal cells X and the number of normal cells Z. Therefore, the total number Y does not change even when the number of omitted cells Na (normal cells) is subtracted from the number of abnormal cells X and the number of omitted cells Na is then added to the number of normal cells Z.

When, for example, a user observes an image of a cell, determines the cell as neither a normal cell nor an abnormal cell, and omits (deletes) the cell from the abnormal cells (when the user presses the "delete" button), the number of omitted cells Nb is subtracted from the number of abnormal cells X which is the numerator of the formula (3) and the number of non-agglutinated cells Y which is the denominator to recalculate the abnormal cell proportion W in the formula (6).

$$W = (X - Nb)/(Y - Nb) ... (6)$$

The system controller 13 redisplays the recalculated abnormal cell proportion on the analysis result display unit 74 of the display unit 28 (step S116). A user can determine whether the patient possibly has cancer by confirming the analysis result displayed on the analysis result display unit 74.

The cell analyzing apparatus according to the present embodiment described above determines an abnormal cell based on the characteristic parameters obtained from the measurement data of the optical detector 3 as an initial step, captures the image of the cell discriminated as an abnormal cell using the imaging unit 26, and then determines an abnormal cell for the second time based on the captured image. Accordingly, the abnormal cell discrimination can be more accurately performed through the user's visual confirmation as compared to performing the discrimination just once. The cell analyzing apparatus according to the present embodiment described above calculates the abnormal cell proportion from the initial abnormal cell discrimination result, and recalculates the abnormal cell proportion after the second abnormal cell discrimination. As a result, the accuracy of the analysis result can be increased.

The embodiment disclosed herein is illustrative and should not be construed as being restrictive in all aspects. The scope of the invention is defined by the scope of claims rather than by the description of the embodiment, and all changes that fall within the scope of claims and the scope and meaning of equivalence are encompassed herein.

For example, in the above embodiment, it is determined whether at least the predetermined number of cancerated or atypical cells of uterine cervix are present in the measurement sample collected from the subject. However, the cell analyzing apparatus according to the present invention is not limited thereto, and can be used to determine whether the measurement sample collected from the subject includes a predetermined number of cancerated or atypical epidermal cells of oral cavity, bladder, or pharynx, or cancerated or atypical cells of any other organs.

In the abnormal cell discrimination according to the above embodiment, a DNA quantity abnormal cell is discriminated after a non-agglutinated cell or an agglutinated cell is discriminated, however, the order of discrimination may be reversed. The characteristic parameters used in the abnormal cell discrimination are not particularly limited to those described in the present embodiment.

The above embodiment displays the abnormal cell proportion on the display unit, however, the present invention is not particularly limited thereto. The number or density of abnormal cells, for example, may be displayed on the display unit.

The above embodiment simply displays the abnormal cell proportion on the display unit, however, the present invention is not limited thereto. In the case where, for example, the abnormal cell proportion is greater than the predetermined threshold value indicating high likelihood of cancer, a warning may be outputted from the display unit. For example, a comment warning the likelihood of cancer may be displayed along with the abnormal cell proportion, or the abnormal cell proportion may be displayed in red, flashed or inverted to emphasize the display. Then, the user can readily see from the display of the screen that the patient is likely to have cancer based on the high abnormal cell proportion, thereby preventing possible oversight and misunderstanding of the analysis result.

In the above embodiment, the user directly observes the image displayed on the image display unit 75 to determine whether the target cell is an abnormal cell. However, the system controller 13 may grasp the cell condition by processing the image to automatically determine whether the target cell is an abnormal cell. This reduces the user's handling steps, thereby improving efficiency and power consumption.

In the above embodiment, the measurement controller 16 of the apparatus body 12 obtains the characteristic parameters from the light signals, and the body 27 of the system controller 13 (CPU 27a) performs the abnormal cell discrimination based on the characteristic parameters. Alternatively, one of the measurement controller 16 and the body 27 may be responsible for these processing steps (carried out by the analyzing unit according to the present invention).

In the above embodiment, the numeral value information (analysis result) and the scattergram are displayed as well as the abnormal cell image. These data are not necessarily displayed on the display unit but may be printed on paper.

The cell analyzing apparatus according to the above embodiment analyzes the measurement sample including cells collected from uterine cervix of a subject. However, the present invention is not limited thereto. The cell analyzing apparatus may analyze a measurement sample including cell components in urine collected from a subject.

In the above embodiment, the system controller 13 is in charge of the abnormal cell discrimination. However, the present invention is not limited thereto. The measurement controller 16 of the apparatus body 12 may perform the abnormal cell discrimination and control the imaging unit 26 to capture the image of the cell discriminated as an abnormal cell.

In the above embodiment, the image of the cell discriminated as an abnormal cell based on the forward scattered light signal, side scattered light signal, and side fluorescent light signal is captured and stored in, for example, the hard disc 27d. However, the present invention is not limited thereto. For example, the image of a cell determined as an analysis target cell based on the forward scattered light signal may be captured and stored in the hard disc 27d. In this case, of the images of the cells to be analyzed stored in the hard disc 27d, the image of a cell determined as an abnormal cell based on the side scattered light signal and the side fluorescent light signal may be displayed on the display unit 28. Of the images of the cells to be analyzed stored in the hard disc 27d, the image of a cell not determined as an abnormal cell may be deleted from the hard disc 27d.

**Claims**

1. A cell analyzing apparatus, comprising:

    a parameter obtaining section for obtaining a characteristic parameter from a cell in a measurement sample;
    an imaging section for capturing an image of the cell in the measurement sample;
    an analyzing section for counting a cell in which the characteristic parameter meets a predetermined requirement among the cells in the measurement sample as a counting target and generating output data based on a counting result;
    a display section for displaying an image of the cell meeting the predetermined requirement and the output data; and
    an input section for receiving an instruction to specify the image displayed on the display section, wherein
    the analyzing section excludes a cell relevant to the specified image from the counting target and regenerates the output data.

2. The cell analyzing apparatus of claim 1, wherein the analyzing section discriminates the cell meeting the predetermined requirement from the other cells in the cells in the measurement sample, and counts the cell meeting the predetermined requirement as a first counting target and counts the other cells as a second counting target, the output data includes information indicating a proportion of the number of the first counting target to the number of the second counting target.

3. The cell analyzing apparatus of claim 2, wherein the display section outputs a warning when the proportion exceeds a predetermined threshold value.

4. The cell analyzing apparatus of claim 2 or 3, wherein the cell meeting the predetermined requirement is an abnormal cell.

5. The cell analyzing apparatus of any one of claims 2 to 4, wherein
the input section receives an instruction to correct a cell which is currently counted as the first counting target to be counted as the second counting target.

**6.** The cell analyzing apparatus of claim 5, wherein when the input section receives the correction instruction, the analyzing section reflects the number of the corrected cells on both of the first counting target and the second counting target and regenerates the output data.

**7.** The cell analyzing apparatus of any one of claims 1 to 6, wherein
the display section displays information relevant to the characteristic parameter obtained from the cell in the measurement sample together with the output data and the cell image.

**8.** The cell analyzing apparatus of any one of claims 1 to 7, wherein
the cell meeting the predetermined requirement comprises at least one of a cancer cell and an atypical cell.

**9.** The cell analyzing apparatus of any one of claims 1 to 8, wherein
the cell included in the measurement sample is a cell collected from uterine cervix of a subject.

**10.** The cell analyzing apparatus of any one of claims 1 to 9, wherein
the cell included in the measurement sample has a nucleus stained with a staining reagent.

**11.** The cell analyzing apparatus of any one of claims 1 to 10, wherein
the parameter obtaining section obtains at least an intensity of fluorescent light emitted from the cell as the characteristic parameter.

**12.** The cell analyzing apparatus of any one of claims 1 to 11, wherein
the imaging section captures the image of the cell meeting the predetermined requirement among the cells in the measurement sample.

**13.** The cell analyzing apparatus of any one of claims 1 to 12, wherein
the display section display a screen including the output data and images of a plurality of cells meeting the predetermined requirement.

**14.** The cell analyzing apparatus of claim 13, wherein
the display section displays the captured images of the plurality of cells meeting the predetermined requirement on the screen, and
the input section receives an instruction to display the image currently not displayed on the screen among the images of the plurality of cells meeting the predetermined requirement on the screen.

**15.** A cell analyzing method, comprising steps of:

obtaining characteristic parameter from a cell in a measurement sample;
capturing an image of the cell in the measurement sample;
counting a cell in which the characteristic parameter meets a predetermined requirement as a counting target and generating output data based on a counting result;
displaying the image of the cell meeting the predetermined requirement and the output data;
receiving an instruction to specify the displayed image; and
excluding a cell relevant to the specified image from the counting target and regenerating the output data.

*FIG. 1*

*FIG. 2*

10

12

SIGNAL PROCESSING CIRCUIT — 4

OPTICAL DETECTOR — 3

IMAGING UNIT — 26

16

SENSOR — 18

DRIVE UNIT — 17

SENSOR SIGNAL PROCESSOR — 23

DRIVE UNIT CONTROL DRIVER — 24

I/O CONTROLLER — 22

MICROPROCESSOR — 20

STORAGE — 21

EXTERNAL COMMUNICATION CONTROLLER — 25

SYSTEM CONTROLLER — 13

# FIG. 3

PERSONAL COMPUTER

27a — CPU

27b — ROM

27c — RAM

29 — INPUT UNIT

27f — I/O INTERFACE

27d — COMPUTER PROGRAM

DATA

28

27g — IMAGE OUTPUT INTERFACE

27e — READOUT DEVICE

27h

27 — MAIN BODY

EP 2 317 303 A2

# FIG. 4

# FIG. 5A

C1

# FIG. 5B

——— FORWARD SCATTERED LIGHT
············· SIDE SCATTERED LIGHT
—·——·— FLUORESCENT LIGHT

INTENSITY

FSCP

0

TIME

FSCW

BASE LINE 2

## FIG. 6A

C2

## FIG. 6B

—— FORWARD SCATTERED LIGHT
·········· SIDE SCATTERED LIGHT
— — FLUORESCENT LIGHT

INTENSITY

0

TIME

SSCW

BASE LINE 3

# FIG. 7A

# FIG. 7B

## FIG. 8

PEAK VALUE OF FORWARD SCATTERED LIGHT (FSCP)

PULSE WIDTH OF FORWARD SCATTERED LIGHT (FSCW)

# FIG. 9

# FIG. 10

# FIG. 11

# FIG. 12

S106

```
( DISCRIMINATE ABNORMAL CELL )
              │
              ▼
┌─────────────────────────────────┐
│       READ FSCW AND FSCP        │  S121
└─────────────────────────────────┘
              │
              ▼
┌─────────────────────────────────┐
│    CLASSIFY CELL TO BE ANALYLZED│  S122
└─────────────────────────────────┘
              │
              ▼
┌─────────────────────────────────┐
│   CALCULATE DIV/PEAK AND READ   │  S123
│    SSCW FOR CELL TO BE ANALYZED │
└─────────────────────────────────┘
              │
              ▼
┌─────────────────────────────────┐
│   CLASSIFY NON-AGGLUTINATED CELL│  S124
│      AND AGGLUTINATED CELL      │
└─────────────────────────────────┘
              │
              ▼
┌─────────────────────────────────┐
│   READ SFLI OF CELL TO BE ANALYZED│  S125
└─────────────────────────────────┘
              │
              ▼
┌─────────────────────────────────┐
│       CLASSIFY/COUNT DNA        │  S126
│     QUANTITY ABNORMAL CELL      │
└─────────────────────────────────┘
              │
              ▼
┌─────────────────────────────────┐
│    DISCRIMINATE ABNORMAL CELL   │  S127
└─────────────────────────────────┘
              │
              ▼
        (    RETURN    )
```

# FIG. 13

28

71 (MENU BAR, TOOL BAR)

72 (PATIENT ATTRIBUTE INFORMATION)

73 (SCATTERGRAM INFORMATION)

D

74 (NUMERAL VALUE INFORMATION ; )
ANALYSIS RESULT

75 (IMAGE INFORMATION)

P

76 NORMAL

77 DELETE

78

FIG. 14

# FIG. 15

FIG. 16

**EP 2 317 303 A2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080108103 A